# EUROPÄISCHE PATENTANMELDUNG

(11) **EP 0 874 495 A2**
(43) Veröffentlichungstag der Anmeldung: **28.10.1998**
(21) Anmeldenummer: 98440074.7
(22) Anmeldetag: 14.04.1998
(51) Int. Cl.: H04L 5/06

(54) **Modulationseinrichtung zur Modulation digitaler Signale**

(30) Priorität: 18.04.1997 DE 19716323
(71) Anmelder: Alcatel Alsthom Compagnie Generale d'Electricité, 75088 Paris (FR)
(72) Erfinder: Böhm, Manfred, Dr., 70499 Stuttgart (DE)
(74) Vertreter: Schätzle, Albin, Dipl.-Phys.

(57) **Zusammenfassung**

Digitale Signale werden üblicherweise z.B. im Einträgerverfahren oder im Mehrträgerverfahren übertragen. Bei beiden Verfahren wird eine Trägerfrequenz je Übertragungskanal bzw. je Teilkanal vorgegebener Bandbreite verwendet. Erfindungsgemäß werden zur Erhöhung der Übertragungkapazität eines Kanals mindestens zwei Trägerfrequenzen ( f1, f2, f3 ) verwendet. Der Frequenzabstand zweier Trägerfrequenzen ist dabei z.B. um den Faktor 500 geringer als der Absolutwert einer Trägerfrequenz ( f1, f2, f3 ). Die durch die Überlagerung ( ADD ) mehrerer Trägerfrequenzen ( f1, f2, f3 ) in einem Kanal entstehende Schwebungsfrequenz ist vernachlässigbar, insbesondere dann, wenn die ausgesendeten Trägerfrequenzen (f1, f2, f3 ) untereinander einen phasengleichen Schwingungsbeginn ausweisen. Durch die Überlagerung ( ADD ) mehrerer Trägerfrequenzen (f1, f2, f3) können für unterschiedliche Bitströme ( DATA1, DATA2, DATA3 ) gleiche resultierende Trägerfrequenzen entstehen. Als Unterscheidungsmerkmal kann beispielsweise eine unterschiedliche Amplitude, eine unterschiedliche Winkeleinstellung oder die Zuordnung zu zusätzlichen Trägerfrequenzen verwendet werden.

## Beschreibung

Die Erfindung bezieht sich auf eine Modulationseinrichtung zur Modulation digitaler Signale nach dem Oberbegriff des Patentanspruchs 1 sowie eine Demodulationseinrichtung nach dem Oberbegriff des Patentanspruchs 10.

Es ist bekannt, z.B. aus der Zeitschrift "Der Fernmeldeingenieur", 8,9/1993, Verlag für Wissenschaft und Leben Georg Heidecker GmbH, Erlangen, Seiten 51 bis 56, digitale Signale im Einträgerverfahren oder im Mehrträgerverfahren zu übertragen. Bei beiden Verfahren wird eine Trägerfrequenz je Übertragungskanal bzw. je Teilkanal vorgegebener Bandbreite verwendet, um digitale Signale zu übertragen. So wird z.B. das Modulationsverfahren QAM = Quadratur Amplituden Modulation auf die digitalen Signale angewandt und das Ergebnis der Trägerfrequenz des jeweiligen Übertragungskanals zugeordnet.

In dem Artikel "Multicarrier Modulation for Data Transmission: An Idea Whose Time Has Come", aus der Zeitschrift IIIE Communications Magazine, Mai 1990, Seiten 5 bis 14 wird auf die Problematik der Überlappung von Spektren eines Übertragungskanals vorgegebener Bandbreite in einen frequenzmäßig benachbarten Übertragungskanal eingegangen. Ist die Überlappung der Spektren derart, daß ihre -3dB Frequenzen übereinanderliegen, so können auf der Empfängerseite mittels entsprechender Filter die Spektren der einzelnen Übertragungskanäle noch detektiert werden.

Die Übertragung digitaler Signale wird somit durch die Bandbreite eines Übertragungskanals begrenzt. Die frequenzmäßige Aneinanderreihung von Übertragungskanälen oder Teilkanälen wird durch die Überlappung der Spektren in benachbarte Kanäle begrenzt.

Es ist daher eine Aufgabe der Erfindung, die Übertragungskapazität digitaler Signale zu erhöhen, ohne die Bandbreite eines Übertragungskanals zu verändern.

Erfindungsgemäß wird diese Aufgabe gelöst durch eine Modulationseinrichtung nach Patentanspruch 1. Diese Modulationseinrichtung ist insbesondere dadurch gekennzeichnet, daß sie geeignet ist, zu übertragende digitale Signale mehreren Trägerfrequenzen in einem Übertragungskanal zuzuordnen. So wird im einfachsten Fall beispielsweise eine Bitfolge aus zwei Bit zwei Trögerfrequenzen eines Übertragungskanals derart zugeordnet, daß z.B. bei der Bitfolge 01 die erste Trägerfrequenz nicht übertragen und die zweite Trägerfrequenz übertragen wird oder bei der Bitfolge 11 beide Trägerfrequenzen übertragen werden. Im Gegensatz zum Stand der Technik, bei dem nur eine Trägerfrequenz je Übertragungsfrequenz vorgesehen ist und bei dem folglich bei einer Bitfolge 11 zeitlich nacheinander zweimal die Trägerfrequenz übertragen werden müßte, erhöht sich die Übertragungskapazität durch die erfindungsgemäße Modulationseinrichtung im voliegenden Beispiel um den Faktor zwei. Bei der gleichzeitigen Übertragung zweier eng benachbarter Trägerfrequenzen findet eine Überlappung der Spektren und eine Überlagerung der Trägerfrequenzen statt, die auf der Empfangsseite eine gegenüber dem Stand der Technik veränderte Demodulation erforderlich machen.

Erfindungsgemäß wird obige Aufgabe daher ebenfalls durch eine Demodulationseinrichtung nach Patentanspruch 10 gelöst. Diese Demodulationseinrichtung ist insbesondere dadurch gekennzeichnet, daß mindestens ein Mittel vorgesehen ist, das geeignet ist, in einem Übertragungskanal vorgegebener Bandbreite mindestens drei Trägerfrequenzen zu detektieren, in Abhängigkeit vom detektierten Ergebnis und der Anzahl der möglichen Trägerfrequenzen eine Bitkombination zu erzeugen und mehrere zeitlich nacheinander erzeugte Bitkombinationen zu mindestens einen Bitstrom zusammenzusetzen.

Vorteilhafte Ausgestaltungen sind den abhängigen Patentansprüchen zu entnehmen.

Im folgenden wird die Erfindung anhand von Ausführungsbeispielen unter teilweiser Zuhilfenahme der Figuren 1 bis 12 erläutert. Es zeigen :
- Fig. 1: eine schematische Darstellung einer ersten erfindungsgemäßen Modulationseinrichtung,
- Fig. 2: ein Diagramm mit drei Signalverläufen in der erfindungsgemäßen Modulationseinrichtung aus Fig. 1,
- Fig. 3: eine schematische Darstellung einer zweiten erfindungsgemäßen Modulationseinrichtung,
- Fig. 4: ein Diagramm mit vier Signalverläufen in der erfindungsgemäßen Modulafionseinrichtung aus Fig. 3,
- Fig. 5: eine schematische Darstellung einer dritten erfindungsgemäßen Modulationseinrichtung,
- Fig. 6: eine schematische Darstellung einer Ausgestaltung der Detektionseinheit der erfindungsgemäßen Modulationseinrichtung aus Fig. 5,
- Fig. 7: eine schematische Darstellung einer vierten erfindungsgemäßen Modulationseinrichtung,
- Fig. 8: eine schematische Darstellung einer fünften erfindungsgemäßen Modulationseinrichtung,
- Fig. 9: zeigt ein Frequenzspektrum einer Mehrträgermodulation,
- Fig. 10: eine schematische Darstellung einer ersten erfindungsgemäßen Demodulationseinrichtung,
- Fig. 11: eine schematische Darstellung einer zweiten erfindungsgemäßen Demodulationseinrichtung,
- Fig. 12: eine schematische Darstellung einer dritten erfindungsgemäßen Demodulationseinrichtung,

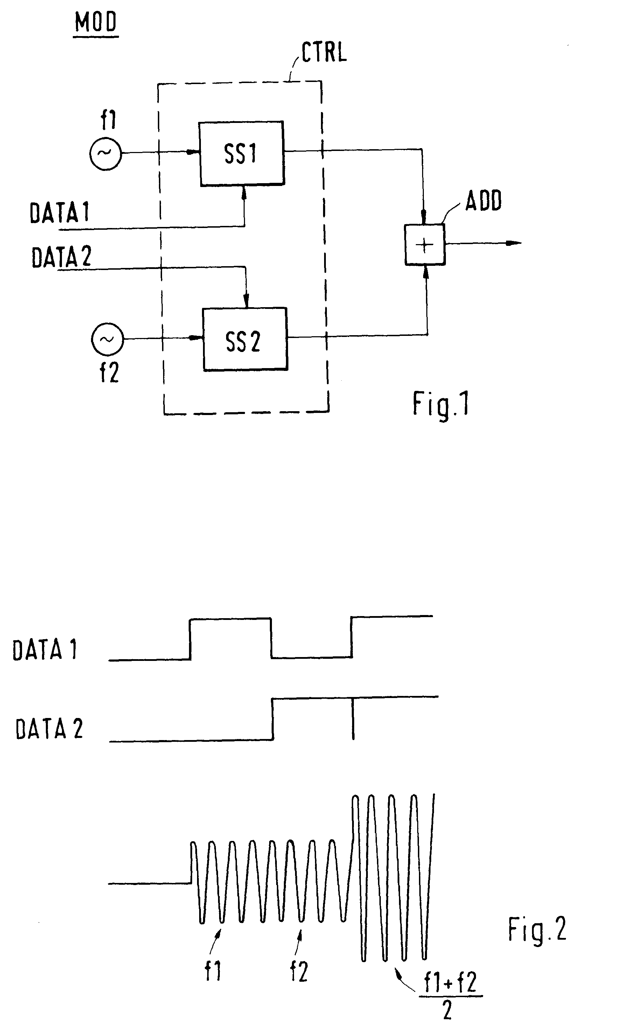

Das erste Ausführungsbeispiel wird im folgenden unter Zuhilfenahme der Figuren 1 und 2 erläutert. Fig. 1 zeigt eine Modulationseinrichtung MOD zur Modulation digitaler Signale, die aus zwei parallel anliegenden Bitströmen DATA1, DATA2 bestehen. Die beiden Bitströme werden beispielsweise erzeugt durch einen nicht dargestellten Seriell/Parallel-Umsetzer.

Die Modulationseinrichtung beinhaltet eine Steuereinheit CTRL, die geeignet ist, zu übertragende digitale Signale zwei Trägerfrequenzen f1, f2 in einem Übertragungskanal mit einer vorgegebenen Bandbreite zuzuordnen. Die Frequenzwerte der Trägerfrequenzen betragen beispielsweise 1,000001 GHz und 1,000002 GHz. Die Bandbreite des Übertragungskanals beträgt beispielsweise 100 kHz.

Zur Erzeugung der beiden Trägerfrequenzen enthält die Modulationseinrichtung MOD zwei Frequenzgeneratoren. Des weiteren ist eine Addiereinheit ADD vorgesehen, mittels derer zwei Trägerfrequenzen überlagert werden können.

Die Steuereinheit CTRL beinhaltet zwei ansteuerbare Mittel SS1, SS2, die zur Aussendung der zwei Trägerfrequenzen f1 und f2, die untereinander einen phasengleichen Schwingungsbeginn aufweisen, dienen. Das Mittel SS1 ist mit dem Frequenzgenerator zur Erzeugung der Trägerfrequenz f1 und der Addiereinheit ADD verbunden. Das Mittel SS2 ist mit dem Frequenzgenerator zur Erzeugung der Trägerfrequenz f2 und der Addiereinheit ADD verbunden. Der Bitsrom DATA1 wird dem Mittel SS1 als Ansteuersignal zugeführt, der Bitstrom DATA2 dem Mittel SS2.

Jedes Mittel SS1, SS2 arbeitet nach dem Start/Stop-Prinzip. Das Mittel SS1 erhält vom Frequenzgenerator zur Ereugung der Trägerfrequenz f1 die Trägerfrequenz f1 und sendet sie zur Addiereinheit ADD oder unterbindet ihre Weiterleitung in Abhängigkeit vom aktuellen Bitwert des Bitstroms DATA1. Hat der Bitstrom DATA1 den logischen Wert Null, so wird die Trägerfrequenz f1 nicht weitergeleitet. Hat der Bitstrom DATA1 den logischen Wert Eins, so wird die Trägerfrequenz f1 weitergeleitet und zwar derart, daß beim Flankenwechsel vom logischen Wert Null zum logischen Wert Eins die Trägerfrequenz f1 mit einem vorgegebenen Phasenwinkel ausgesendet wird. Ist die Trägerfrequenz f1 beispielsweis eine Kosinusfunktion, so bietet es sich an, den vorgegebenen Phasenwinkel auf Null Grad festzulegen, um auf der Demodulationsseite eine schnelle Demodulation zu ermöglichen. Mit dem Flankenwechsel vom logischen Wert Eins zum logischen Wert Null wird die Aussendung der Trägerfrequenz f1 beendet. Beim nächsten Flankenwechsel auf Eins beginnt die Aussendung der Trägerfrequenz f1 wieder mit dem vorgegebenen Phasenwinkel. Entsprechendes gilt für das Mittel SS2.

Fig. 2 zeigt ein Diagramm mit drei Signalverläufen. Der erste Signalverlauf zeigt einen Teil des Bitstroms DATA1. Der zweite Signalverlauf zeigt einen Teil des Bitstroms DATA2. Der dritte Teil zeigt den Signalverlauf des Ausgangssignals der Addiereinheit ADD, resultierend aus obigen Teilen der Bitströme DATA1 und DATA2. Die Signalverläufe sind derart ausgewählt, daß sie alle möglichen Bitkombinationen zwischen den Bitströmen DATA1 und DATA2 abdecken. Aus zwei binären Signale können die Bitkombinationen 00, 01, 10 und 11 gebildet werden. Haben beide Bitströme DATA1 und DATA2 den logischen Wert 0, so wird keine Trägerfrequenz ausgesendet und das Ausgangssignal der Addiereinheit ADD hat auch den Wert 0. Hat der Bitstrom DATA1 den Wert 1 und der Bitstrom DATA2 den Wert 0, so beinhaltet das Ausgangssignal der Addiereinheit ADD die Trägerfrequenz f1. Hat der Bitstrom DATA1 den Wert 0 und der Bitstrom DATA2 den Wert 1, so beinhaltet das Ausgangssignal der Addiereinheit ADD die Trägerfrequenz f2. Haben beide Bitströme DATA1 und DATA2 den Wert 1, so beinhaltet das Ausgangssignal der Addiereinheit ADD die Überlagerung der Trägerfrequenz fl und f2. Durch die Überlagerung ergibt sich ein Signal doppelter Amplitude und eine resultierende Trägerfrequenz (fl +f2)/2. Folgendes Beispiel soll dies verdeutlichen :
F1 = cos ( f1 x t), mit F1 = das durch den Frequenzgenerator zur Erzeugung der Trägerfrequenz f1 generierte Signal, und t = Zeit,
F2 = cos ( f2 x t), mit F2 = das durch den Frequenzgenerator zur Erzeugung der Trägerfrequenz f2 generierte Signal, und t = Zeit,
F1 + F2 = 2 × cos( fT × t ) × cos(fS × t), mit fT = der resultierenden Trägerfrequenz und fS = der Schwebungsfrequenz;
fT berechnet sich zu fT = (f1 + f2)/2 = 1,0000015 GHz,
fS berechnet sich zu fS = (f2-f1)/2 = 1 kHz,
fS und fT unterscheiden sich somit um den Faktor 1000000 voneinander. fS wirkt sich auf die Amplitude des überlagerten Signals aus. Beginnen jedoch beide Signale mit dem Phasenwinkel 0 Grad, so befindet sich das überlagerte Signal in seinen Maximum, bei dem sich die Amplitude nur wenig mit der Zeit ändert. Die Schwebungsfrequenz fS hat in diesem Bereich somit wenig Einfluß auf die Amplitude. In diesem Anfangsbereich bleibt die Amplitude daher annähernd konstant. Die Bitfolgefrequenz der Bitströme DATA1 und DATA2 ist derart an die Trägerfrequenzen f1 und f2 angepaßt, das die Veränderung der Amplitude durch die Schwebungsfrequenz fS vernachlässigt werden kann. Die Bitfolgefrequenz der Bitströme DATA1 und DATA2 beträgt beispielsweise 500 MHz.

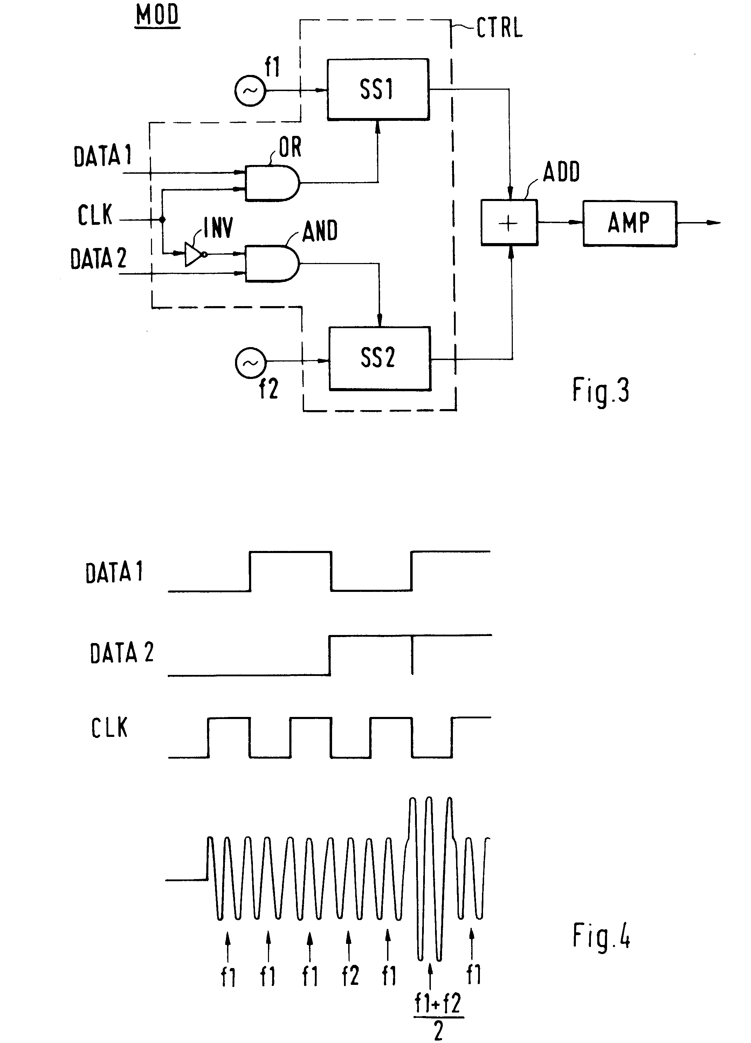

Das zweite Ausführungsbeispiel wird im folgenden unter Zuhilfenahme der Figuren 3 und 4 erläutert. Fig. 3 zeigt eine Modulationseinrichtung MOD zur Modulation digitaler Signale, die aus zwei parallel anliegenden Bitströmen DATA1, DATA2 bestehen. Die Modulationseinrichtung MOD entspricht der Modulationseinrichtung aus Fig. 1 mit Ausnahme einer zusätzlichen Anpassungsschaltung, bestehend aus einem ODER-Gatter OR, einem UND-Gatter AND und einem Inverter INV, sowie eines zusätzlichen Amplitudenbegrenzers AMP, der unabhängig von der Anpassungsschaltung verwendet werden kann.

Die Anpassungsschaltung dient dazu, die Ansteuerung der Mittel SS1 und SS2 mit einem Taktsignal CLK zu kombinieren, um die Aussendung einer vorgegebenen Trägerfrequenz f1 in Abhängigkeit des Taktsignals zu erreichen. Das Taktsignal wird z.B. in einem nicht dargestellten Taktgenerator generiert und einem der zwei Eingänge des ODER-Gatters OR sowie dem Eingang des Inverters INV zugeführt. Die Taktfrequenz des Taktsignals CLK ist doppelt so hoch, wie die Bitfolgefrequenz der Bitströme DATA1 und DATA2. Sie dient z.B. dazu, zwischen den überlagerten, ausgesendeten Trägerfrequenzen in äquidistanten zeitlichen Abständen ein Synchronisationssignal einzufügen, auf das sich die Demodulationseinrichtung oder der Empfänger auf der Empfangsseite aufsynchronisieren kann. Das Synchronisationssignal ist im einfachsten Fall die Trägerfrequenz f1.

Das ODER-Gatter OR ist an einem Eingang mit dem Bitstrom DATA1 belegt, am anderen Eingang mit dem Taktsignal CLK. Der Ausgang ist mit dem Steuereingang des Mittels SS1 verbunden.

Das UND-Gatter AND ist an einem von zwei Eingängen mit dem Bitstrom DATA2 belegt und am anderen Eingang mit dem Ausgangssignal des Inverters INV. Der Ausgang ist mit dem Steuereingang des Mittels SS2 verbunden.

Hat das Taktsignal den logischen Wert Eins, so ist über die Oder- Verknüpfung sichergestellt, daß die Taktfrequenz f1 zur Addiereinheit weitergeleitet wird. Gleichzeitig ist über den Inverter INV und die Und- Verknüpfung sichergestellt, daß eine logische Null am Mittel SS2 anliegt, so daß das Aussenden der Trägerfrequenz f2 unterdrückt wird. Hat das Taktsignal CLK den logischen Wert Null, so liegt an einem Eingang des ODER-Gatters OR eine Null an und an einem Eingang des UND-Gatters AND eine Eins an, so daß die Ansteuerung der Mittel SS1 und SS2 ausschließlich von den Bitwerte der Bitströme DATA1 bzw. DATA2 abhängt. Dies ist in Fig. 4 verdeutlicht.

Fig. 4 zeigt ein Diagramm mit vier Signalverläufen in der Modulationseinrichtung aus Fig. 3. Der erste Signalverlauf zeigt einen Teil des Bitstroms DATA1 mit der Bitfolge 0101. Der zweite Signalverlauf zeigt einen Teil des Bitstroms DATA2 mit der Bitfolge 0011. Der dritte Signalverlauf zeigt eine Teil des Taktsignals CLK mit der Bitfolge 01010101. Das Taktsignal CLK ist synchron zu den Bitströmen DATA1 und DATA2, die untereinander auch synchron sind. Letzteres wird beispielsweise über einen Seriell/Parallel-Umsetzer erreicht. Der Seriell/Parallel-Umsetzer arbeitet beispielsweise mit dem Takt der Taktsignals oder einem daraus abgeleiteten Takt, so daß die Synchronität zu den Bitströmen DATA1 und DATA2 eingestellt werden kann.

Der vierte Signalverlauf zeigt das in der Addiereinheit überlagerte Signal, beinhaltend die Trägerfrequenzen f1 und f2. Haben sowohl die Bitströme DATA1 und DATA2 als auch das Taktsignal CLK den Wert Null, so hat das überlagerte Signal am Ausgang der Addiereinheit ADD auch den Wert Null. Ist der Wert des Taktsignals CLK gleich Eins, so beinhaltet das überlagerte Signal lediglich die Trägerfrequenz f1, aber nicht die Trägerfrequenz f2. Ist der Wert der Taktsignals gleich Null, so hängt das überlagerte Signal von den Werten der Bitströme DATA1 und DATA2 ab, vergleichbar dem ersten Ausführungsbeispiel. Sind z.B. beide Bitströme DATA1 und DATA2 gleich Eins, so hat das überlagerte Signal die resultierende Trägerfrequenz (f1 + f2)/2 und die Amplitude zwei.

Durch die Verwendung eines Amplitudenbegrenzers AMP, der der Addiereinheit ADD nachgeschaltet ist, kann die Amplitude des überlagerten Signals, insbesondere für den Fall, daß beide Bitströme DATA1 und DATA2 gleich Eins sind, auf den Wert Eins begrenzt werden, um für das gesamte überlagerte Signal eine einheitliche maximale Amplitude zu schaffen, wodurch sich ein an den Übertragungsweg optimal angepaßtes Signal-zu-Rausch Verhältnis einstellen läßt. Die Demodulation ist auch ohne Kenntnis der Amplitude möglich, da lediglich die Frequenz des empfangenen Signals detektiert werden braucht. Ist die detektierte Frequenz gleich f1, so liegt die Bitkombination 01 vor, wobei die 1 dem Bitstrom DATA1 zugehörig ist und die 0 dem Bitstrom DATA2. Ist die detektierte Frequenz gleich (f1 + f2)/2, so liegt die Bitkombination 11 vor, wobei die erste 1 dem Bitstrom DATA2 zugehörig ist und die zweite 1 dem Bitstrom DATA1.

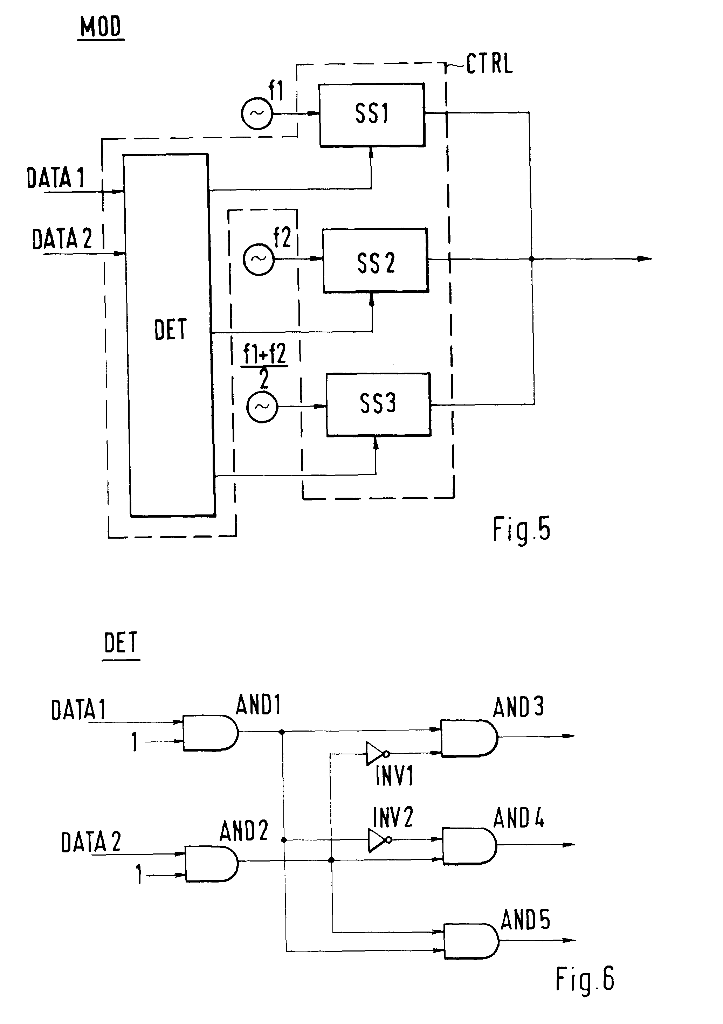

Das dritte Ausführungsbeispiel wird im folgenden unter Zuhilfenahme der Figuren 5 und 6 erläutert. Fig. 5 zeigt eine Modulationseinrichtung MOD zur Modulation digitaler Signale, die aus zwei parallel anliegenden Bitströmen DATA1, DATA2 bestehen. Die Modulationseinrichtung MOD entspricht der Modulationseinrichtung aus Fig. 1 mit Ausnahme einer zusätzlichen Detektionseinheit DET, einem zusätzlichen Frequenzgenerator zur Erzeugung der Trägerfrequenz (f1 + f2)/2 und einem zusätzlichen Mittel SS3, das dem Aufbau nach dem Mittel SS1 entspricht. Die Modulationseinrichtung MOD benötigt im Vergleich zu den Modulationseinrichtungen aus Fig. 1 und 3 keine Addiereinheit und keinen Amplitudenbegrenzer.

Die Detektionseinheit DET dient dazu, die Binärwerte der Bitströme DATA1 und DATA2 zu detektieren und zu Ansteuersignalen für die Mittel SS1, SS2 und SS3 zu kombinieren. Ist der Binärwert des Bitstroms DATA1 gleich Eins und gleichzeitig der Binärwert des Bitstroms DATA2 gleich Null, so wird eine Steuersignal mit dem logischen Wert Eins zum Mittel SS1 und ein Steuersignal mit dem logischen Wert Null oder kein Steuersignal zum Mittel SS2 übertragen, damit nur die Trägerfrequenz f1 ausgesendet wird. Sind die Binärwerte beider Bitströme gleich Eins, so wird eine Steuersignal mit dem Wert Eins zum Mittel SS3 gesendet, damit die Trägerfrequenz (f1 + f2)/2 ausgesendet wird.

Damit ergeben sich der Fig. 2 vergleichbare Signalverläufe mit dem unterschied, daß die Amplitude konstant ist. In die Modulationseinrichtung MOD kann auch eine Anpassungsschaltung vergleichbar Fig. 3 eingebaut werden, so daß sich, bis auf die Amplitude, die konstant ist, die Signalverläufe aus Fig. 2 ergeben. Dem Ausgang der Modulationsschaltung MOD kann auch ein Verstärker nachgeschaltet sein, um die Amplitude des Ausgangssignals an die Übertragungseigenschaften des Übertragungsweges anzupassen. Treten verschiedene frequenzabhängige Dämpfungen auf dem Übertragungsweg auf, so können z.B. Verstärker mit unterschiedlichen Verstärkungen an den Ausgängen der Mittel SS1, SS2 und SS3 vorgesehen werden.

Fig. 6 zeigt eine schematische Darstellung einer Ausgestaltung der Detektionseinheit DET der erfindungsgemäßen Modulationseinrichtung aus Fig. 5. Die Detektionseinheit DET beinhaltet fünf UND-Gatter AND1, AND2, AND3, AND4, AND5 und zwei Inverter INV1, INV2, die miteinander verschaltet sind. Alle Und-Gatter AND1, AND2, AND3, AND4, AND5 haben zwei Eingänge und einen Ausgang.

Am UND-Gatter AND1 liegt der Bitstrom DATA1 und eine permanente logische Eins an. Am UND-Gatter AND2 liegt der Bitstrom DATA2 und eine permanente logische Eins an. Der Ausgang des Und-Gatter AND1 ist mit einem Eingang von UND-Gatter AND3, einem Eingang von UND-Gatter AND5 und über den Inverter INV2 mit einem Eingang von UND-Gatter AND4 verbunden. Der Ausgang des Und-Gatter AND2 ist mit einem Eingang von UND-Gatter AND4, einem Eingang von UND-Gatter AND5 und über den Inverter INV1 mit einem Eingang von UND-Gatter AND3 verbunden.

An den Ausgängen der UND-Gatter AND3, AND4, AND5 liegen somit die logischen Werte 000, 100, 010, 001 an, wenn die Bitströme DATA1, DATA2 die Binärkombinationen 00, 10, 01, 11 aufweisen, wodurch sich, bis auf die Amplitude, die Signalverläufe gemäß Fig. 2 oder, wenn noch zusätzlich das Taktsignal berücksichtigt wird, die Signalverläufe gemäß Fig. 4 ergeben.

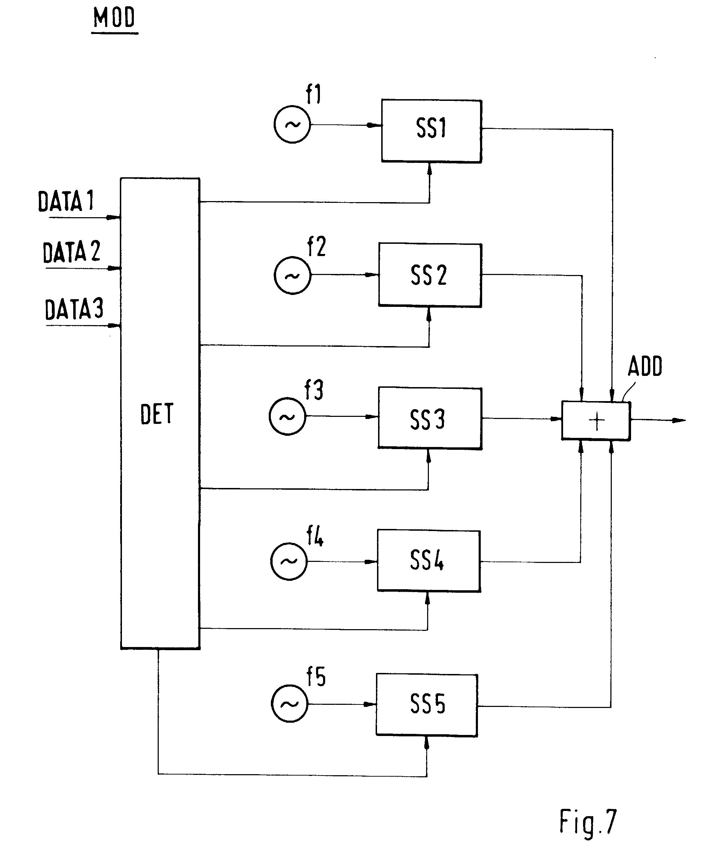

Das vierte Ausführungsbeispiel wird im folgenden unter Zuhilfenahme der Figur 7 erläutert. Fig. 7 zeigt eine Modulationseinrichtung MOD zur Modulation digitaler Signale, die aus drei parallel anliegenden Bitströmen DATA1, DATA2, DATA3 bestehen. Die Elemente der Modulationseinrichtung MOD, die die gleiche Bezeichnung tragen, wie die Elemente der Fig. 1, haben einen vergleichbaren Aufbau und eine vergleichbare Funktion.

Die Modulationseinrichtung MOD beinhaltet eine Detektioneinheit DET, die die Binärwerte der drei Bitströme DATA1, DATA2, DATA3 detektiert und zu Steuersignalen für die Mittel SS1, SS2, SS3 kombiniert. Das Mittel SS3 entspricht seinem Aufbau nach dem Mittel SS1.

Mit drei Bitströmen DATA1, DATA2, DATA3 sind acht Bitkombinationen möglich: 000, 001, 010, 011, 100, 101, 110, 111, wenn für jeden Bitstrom DATA1, DATA2, DATA3 die logischen Werte 0 oder 1 angenommen werden können. Die Aufgabe der Detektionseinheit DET ist es, eine Zuordnung dieser Bitkombinationen zu Trägerfrequenzen zu finden.

Eine erste Möglichkeit der Zuordnung besteht darin, die drei Bitströme DATA1, DATA2, DATA3 drei unterschiedlichen Trägerfrequenzen f1, f2, f3 zuzuordnen. In drei Fällen entstehen dabei resultierende Trägerfrequenzen, die übereinstimmen; dies ist für die Bitkombinationen 010, 101 und 111 der Fall. In jedem dieser Fälle ist die resultierende Trägerfrequenz gleich f2, wenn die drei Trägerfrequenzen f1, f2, f3 äquidistante Frequenzabstände zueinander haben. Ein Unterscheidungskriterium bei der Demodulation ist dann die resultierende Trägerfrequenz in Verbindung mit der empfangenen Amplitude. Für den Fall 010 ist die Amplitude gleich eins, für den Fall 101 ist die Amplitude gleich zwei und für den Fall 111 ist die Amplitude gleich drei, so daß auf der Empfängerseite die übertragene Bitkombination durch Kombination der empfangenen Trägerfrequenz mit der empfangenen Amplitude demoduliert werden kann.

Eine zweite Möglichkeit der Zuordnung besteht darin, die drei Bitströme DATA1, DATA2, DATA3 fünf unterschiedlichen Trägerfrequenzen f1, f2, f3, f4, f5 zuzuordnen.

Die Trägerfrequenzen f4 und f5 werden in Frequenzgeneratoren erzeugt und jeweils einem Mittel SS4, SS5 zugeführt, das durch die Detektionseinheit DET angesteuert wird.

Durch die Verwendung von fünf Trägerfrequenzen f1, f2, f3, f4, f5 kann die Amplitude des überlagerten Ausgangssignals am Ausgang der Addiereinheit, z.B. durch einen Amplitudenbegrenzer auf einen einheitlichen Wert begrenzt werden und ggf. mit einem nachgeschalteten Verstärker an die für die Übertragungsstrecke optimale Amplitude im Hinblick auf ein maximales Signal-zu-Rausch Verhältnis angepaßt werden. Dies soll nachfolgendes Zahlenbeispiel näher erläutern :

Für die drei Bitströme DATA1, DATA2, DATA3 gibt es acht mögliche Bitkombinationen, s.o. . Ordnet man dem Bitstrom DATA1 die Trägerfrequenz f1 zu, dem Bitstrom DATA2 Trägerfrequenz f2 und dem Bitstrom DATA3 Trägerfrequenz f3, so enstehen folgende resultierenden Trägerfrequenzen :

Für die Bitkombination 000 die resultierende Trägerfrequenz 0, für 001 f1, für 010 f2, für 011 (f1 + f2)/2, für 100 f3, für 101 (f1+f3)/2, für 110 (f2+f3)/2, für 111 (f1+f2+f3)/2.

Haben die einzelnen Trägerfrequenzen äquidistante Abstände untereinander, so gilt f2 = (f1+f3)/2 = (f1+f2+f3)/2.

Für die Bitkombinationen 101 und 111 kann eine andere Zuordnung erfolgen, beispielsweise für 101 f4 und für 111 f5. Auf diese Weise ist eine Demodulation auf der Empfangsseite vereinfacht möglich, da nur die resultierende Trägerfrequenz detektiert werden muß, unabhängig von der Amplitude.

Die Beträge der Trägerfrequenzen werden beispielsweise zu f1 = 1000,05 Hz, f2 = 1000,10 Hz, f3 = 1000,15 Hz, f4 = 1000,175 Hz und f5 = 1000,20 Hz gewählt. Damit ergeben sich für die Bitkombinationen folgende resultierenden Trägerfrequenzwerte :

Für 000 0, für 001 1000,05 Hz, für 010 1000,10 Hz, für 011 1000,075 Hz, für 100 1000,15 Hz, für 101 1000,175 Hz, für 110 1000,125 Hz, für 111 1000,20 Hz.

Die Auflösung zwischen zwei resultierenden Trägerfrequnzwerten beträgt mindestens 25 Hz, was auf der Empfangsseite mit ausreichender Genauigkeit detektierbar ist.

Eine dritte Möglichkeit der Zuordnung besteht darin, die drei Bitströme DATA1, DATA2, DATA3 drei unterschiedlichen Trägerfrequenzen f1, f2, f3 zuzuordnen, deren Frequenzwerte derart gewäht sind, daß ihre unterschiedliche Überlagerungen nicht zu gleichen Frequenzwerten führen. Dies kann durch Frequenzwerte erreicht werden, die nicht äquidistant zueinander sind. Somit wären die durch die unterschiedlichen Bitkombinationen 010, 101, 111 hervorgerufenen resultierenden Trägerfrequenzwerte f2, (f1 +f3)/2, (f1+f2+f3)/2 nicht gleich. Damit entfallen die Frequenzgeneratoren zur Erzeugung der Trägerfrequenzen f4 unf f5 und die Mittel SS4 und SS5. Es muß jedoch darauf geachtet werden, daß die Auflösung zwischen allen resultierenden Trägerfrequenzen ausreichend groß ist, um auf der Empfangsseite detektiert werden zu können. Welcher der drei Möglichkeiten der Vorzug gegeben wird hängt von den Parametern im Einzelfall ab, z.B. Kostenfrage.

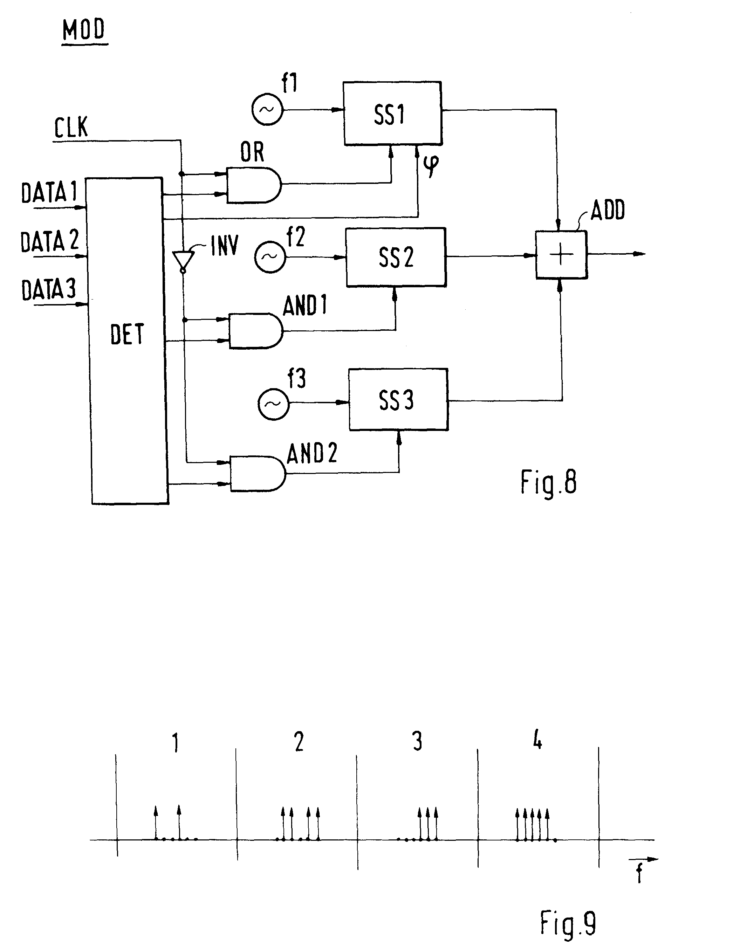

Das fünfte Ausführungsbeispiel wird im folgenden unter Zuhilfenahme der Figur 8 erläutert. Fig. 8 zeigt eine Modulationseinrichtung MOD zur Modulation digitaler Signale, die aus drei parallel anliegenden Bitströmen DATA1, DATA2, DATA3 bestehen. Die Elemente der Modulationseinrichtung MOD, die die gleiche Bezeichnung tragen, wie die Elemente der Fig. 1, haben einen vergleichbaren Aufbau und eine vergleichbare Funktion.

Mit drei Bitströmen DATA1, DATA2, DATA3 sind acht Bitkombinationen möglich: 000, 001, 010, 011, 100, 101, 110, 111, wenn für jeden Bitstrom DATA1, DATA2, DATA3 die logischen Werte 0 oder 1 angenommen werden können. Die Aufgabe der Detektionseinheit DET ist es, eine Zuordnung dieser Bitkombinationen zu Trägerfrequenzen zu finden.

Eine Möglichkeit der Zuordnung besteht darin, die drei Bitströme DATA1, DATA2, DATA3 drei unterschiedlichen Trägerfrequenzen f1, f2, f3 zuzuordnen. In drei Fällen entstehen dabei resultierende Trägerfrequenzen, die übereinstimmen; dies ist für die Bitkombinationen 010, 101 und 111 der Fall. In jedem dieser Fälle ist die resultierende Trägerfrequenz gleich f2, wenn die drei Trägerfrequenzen f1, f2, f3 äquidistante Frequenzabstände zueinander haben. Ein Unterscheidungskriterium bei der Demodulation ist dann die resultierende Trägerfrequenz in Verbindung mit der empfangenen Amplitude. Für den Fall 010 ist die Amplitude gleich eins, für den Fall 101 ist die Amplitude gleich zwei und für den Fall 111 ist die Amplitude gleich drei, so daß auf der Empfängerseite die übertragene Bitkombination durch Kombination der empfangenen Trägerfrequenz mit der empfangenen Amplitude demoduliert werden kann. Anstelle der Übertragung unterschiedlicher Amplituden, was das Signal-zu-Rausch Verhältnis auf der Übertragungsstrecke negativ beeinflussen kann, kann die Information über die unterschiedlichen Bitkombinationen 010, 101, 111 mittels der Trägerfrequenz f2 in Verbindung mit der Übertragung einer Winkeleinstellung übertragen werden.

Ähnlich wie zu Fig. 3 erläutert kann über eine Anpassungsschaltung ein Taktsignal in das Ausgangssignal der Addiereinheit ADD eingefügt werden. Im vorliegenden Fall beinhaltet die Anpassungsschaltung ein ODER-Gatter OR, einen Inverter INV und zwei UND-Gatter AND1, AND2. Einem Eingang des ODER-Gatters OR und der UND-Gatter AND1, AND2 werden jeweils die in der Detektionseinheit DET generierten Ansteuersignale zugeführt. Dem anderen Eingang werden das Taktsignal im Falle des ODER-Gatters OR und das invertierte Taktsignal im Falle der UND-Gatter AND1, AND2 zugeführt. Am Ausgang der Addiereinheit ADD bildet sich somit eine Signal vergleichbar dem vierten Signalverlauf in Fig. 4, beinhaltend ein Synchronisationssignal mit der Trägerfrequenz f1. Durch ein zusätzliches Ansteuersignal, betreffend die Winkeleinstellung ϕ, wird das Synchronisationssignal nicht immer mit der Phaselage 0 Grad ausgesandt, sondern mit definierten Phasen lagen, die den Bitkombinationen zugeordnet sind. So werden z.B. den Bitkombinationen 010, 101, 111 die Phasenlagen 0, 90, 180 Grad zugeordnet. Tritt demnach die Bitkombination 101 auf, so wird zusätzlich zu der Trägerfrequenz f2 das nachfolgende Synchronisationssignal mit der Trägerfrequenz f1 mit der Anfangsphaselage 90 Grad ausgesendet. Die von Null unterschiedliche Phasenlage wird auf der Empfangsseite detektiert und kann auf diese Weise der Bitkombination 101 zugeordnet werden.

Die Realisierung der Detektionseinheit DET auf der Sendeseite sowie der auf der Empfangsseite benötigten Detektionseinheit kann fest verdrahtet erfolgen, ähnlich wie Fig. 6 oder mittels eines Softwareprogramms.

Obige Ausführungsbeispiele betreffen eine Modulationseinrichtung zur Modulation digitaler Signale, die aus zwei oder drei parallel anliegenden Bitströmen bestehen. Auf einfache Art und Weise kann auch eine Modulationseinrichtung für digitale Signale aufgebaut werden, die aus mehr als drei parallel anliegenden Bitströmen bestehen. Es können auch die Lehren verschiedener Ausführungsbeispiele miteinander kombiniert werden. Die Anzahl der parallel anliegenden Bitströme wird begrenzt durch die Bandbreite des Übertragungskanals und der minimal erfoderlichen Auflösung zwischen zwei Trägerfrequenzen. Ein Faktor von mindestens 500 zwischen dem Frequenzabstand zweier Trägerfrequenzen und dem Absolutwert einer Trägerfrequenz erscheint hierzu geeignet. Es kann auch von einer Spektrumsmodulation gesprochen werden, da in einem Übertragungskanal vorgegebener Bandbreite anstelle einer einzelnen Trägerfrequenz ein Spektrum von Trägerfrequenzen verwendet wird.

Fig. 9 zeigt ein Frequenzspektrum einer Mehrträgermodulation. Das Frequenzspektrum zeigt vier Teilkanäle 1, 2, 3, 4 mit jeweils sechs möglichen Trägerfrequenzen. Die Erfindung kann auch bei einem Mehrträgerverfahren mit mehr Teilkanälen angewendet werden. In jedem Teilkanal kann die Spektrumsmodulation angewendet werden, um die Übertragungskapazität zu erhöhen. Die Trägerfrequenz eines Teilkanals wird dazu in ein Frequenzspektrum, bestehend aus mehreren Trägerfrequenzen aufgeteilt. Daraufhin wird z.B. mittels einer Modulationseinrichtung aus Fig. 1, 3, 5, 7 oder 8 eine zusätzliche Modulation durchgeführt.

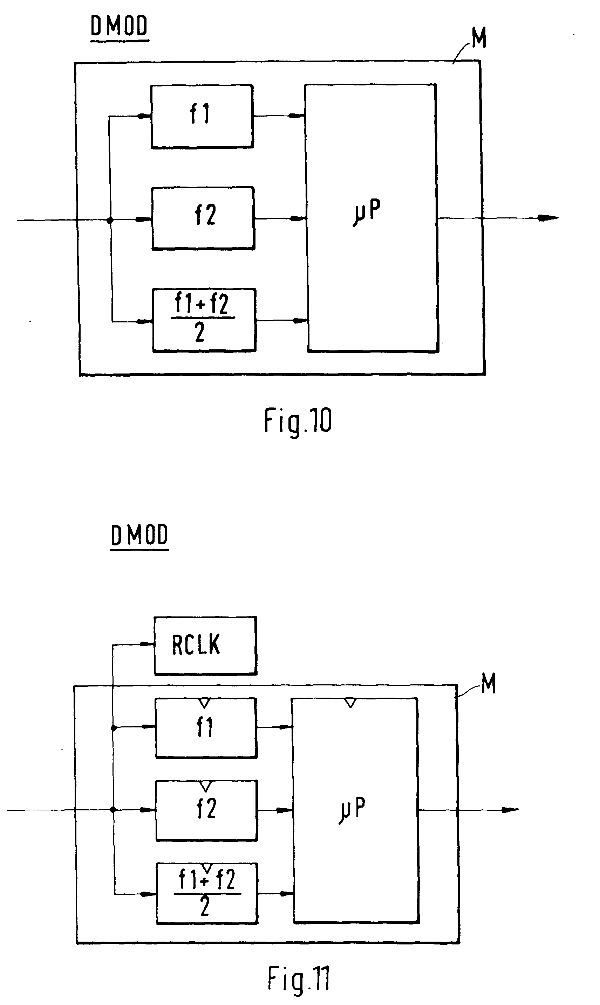

Fig. 10 zeigt eine schematische Darstellung einer ersten erfindungsgemäßen Demodulationseinrichtung. Die Demodulationseinrichtung DMOD demoduliert die von der Modulationseinrichtung aus Fig. 1 ausgesendeten Signale. Die Demodulationseinrichtung DMOD enthält ein Mittel M, das geeignet ist, in einem Übertragungskanal vorgegebener Bandbreite drei Trägerfrequenzen f1, f2, (f1 + f2)/2 zu detektieren. Dazu sind z.B. drei Frequenzfilter vorgesehen, die eine logische Eins zu einer Recheneinheit µP, z.B. ein Mikroprozessor, übertragen, wenn in dem empfangenem Signal die entsprechende Trägerfrequenz vorkommt. In Abhängigkeit vom detektierten Ergebnis, z.B. ist im ersten Zeitschlitz die Trägerfrequenz f1 detektiert worden, und der Anzahl der möglichen Trägerfrequenzen, hier drei, wird von der Recheneinheit µP eine Bitkombination erzeugt, die der Bitkombination entspricht, die auf der Sendeseite zur Zuordnung zur detektierten Trägerfrequnz geführt hat. Die Trägerfrequenz f1 steht als Synomym für die Bitkombination 01, so daß diese Kombination von der Recheneinheit µP erzeugt wird. Die Recheneinheit µP kann derart programmiert sein, daß die auf der Sendeseite erfolgte Zuordnung der Bitkombinationen zu den Trägerfrequenzen in einer Tabelle abgespeichert ist und die Recheneinheit µP durch Vergleich der detektierten Trägerfrequenzen mit der Tabelle auf die Bitkombinationen schließen kann. Die Tabelle kann auch in einer fest verdrahteten Schaltung aus z.B. UND-, ODER-Gattern und Invertern implementiert sein. Mehrere zeitlich nacheinander erzeugte Bitkombinationen werden in der Recheneinheit µP zu mindestens einen Bitstrom zusammengesetzt. Werden z.B. die Bitkombinationen 01, 01, 11, 00, 10 nacheinander erzeugt, so können durch ein Demultiplexen mit doppelter Frequenz die Bitkombinationen zu zwei Bitströmen zusammengesetzt werden, z.B. 00101 und 11100. Dies ist erforderlich, wenn die Bitsröme DATA1 und DATA2 auf der Sendeseite aus zwei unterschiedlichen Quellen stammen.

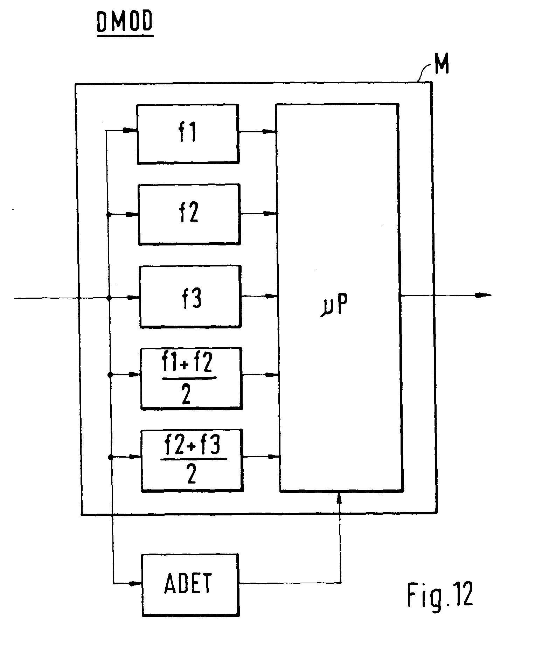

Fig. 11 zeigt eine schematische Darstellung einer zweiten erfindungsgemäßen Demodulationseinrichtung. Die Demodulationseinrichtung DMOD demoduliert die von der Modulationseinrichtung aus Fig. 3 ausgesendeten Signale. Die Elemente, die in Fig. 11 und Fig. 10 die gleiche Bezeichnungen tragen entsprechen einander in Aufbau und Funktion. Zusätzlich ist in Fig. 11 eine Taktrückgewinnungsschaltung RCLK vorhanden, um aus dem Synchronisationssignal, der Trägerfrequenz f1, die mit der Frequenz des Taktsignals aus Fig. 3 ausgesendet wird, einen Takt abzuleiten, mittels dessen die drei Frequenzfilter und die Recheneinheit µP angesteuert werden. Die Frequenzfilter senden damit eine logische Eins nur dann zur Recheneinheit µP, wenn sie eine Trägerfrequenz detektiert haben und gleichzeitig der Takt den Wert Null hat. Die Recheneinheit µP kann mit dem Takt arbeiten, um den Vergleich mit der Tabelle durchzuführen und/oder die Aufteilung in zwei Bitströme durchzuführen.

Fig. 12 zeigt eine schematische Darstellung einer dritten erfindungsgemäßen Demodulationseinrichtung. Die Demodulationseinrichtung DMOD demoduliert die von der Modulationseinrichtung aus Fig. 7 ausgesendeten Signale. Die Elemente, die in Fig. 12 und Fig. 10 die gleiche Bezeichnungen tragen entsprechen einander in Aufbau und Funktion. Zusätzlich sind zwei Frequenzfilter zum Detektieren der Trägerfrequenzen f3 und (f2+f3)/2 vorgesehen. Die Recheneinheit µP führt die komplementäre Funktion der Detektionseinheit aus Fig. 7 aus.

Für die erste Möglichkeit aus Fig. 7 ist ein Amplitudendetektor ADET vorgesehen, um die Amplitude der empfangenen Trägerfrequenz f2 zu detektieren und den detektierten Wert dem Mittel M zuzuführen. Das Mittel M ist geeignet, eine Bitkombination auch in Abhängigkeit des detektierten Wertes zu erzeugen. Für den Fall, daß die detektierte Amplitude gleich eins ist und die detektierte Trägerfrequenz gleich f2 ist, wird die Bitkombination 010 erzeugt, für den Fall, daß die Amplitude gleich zwei und die Trägerfrequenz gleich f2 ist, die Bitkombination 101 und für den Fall, daß die Amplitude gleich drei und die Trägerfrequenz gleich f2 ist, die Bitkombination 111. Auf der Empfängerseite kann somit die übertragene Bitkombination durch Kombination der empfangenen Trägerfrequenz mit der empfangenen Amplitude demoduliert werden.

Für die zweite Möglichkeit aus Fig. 7 sind anstelle des Amplitudendetektors ADET zwei Frequenzfilter zur Detektion der Trägerfrequenzen f4 und f5 hinzuzufügen.

Für die dritte Möglichkeit aus Fig. 7 sind anstelle des Amplitudendetektors ADET zwei Frequenzfilter zur Detektion der Trägerfrequenzen (f1 +f3)/2 und (f1 +f2+f3)/2 hinzuzufügen.

Für die in Fig. 8 erläuterte Möglichkeit ist der Amplitudendetektor ADET durch eine Taktrückgewinnungsschaltung zu ersetzen, vergleichbar Fig. 11, die das Synchronisationssignal detektiert und einen Phasendetektor beinhaltet, um die Phasenlage der Trägerfrequenz fl zu detektieren und den detektierten Wert dem Mittel M zuzuführt. Das Mittel M kann dann eine Bitkombination auch in Abhängigkeit des detektierten Wertes erzeugen, indem es den detektierten Wert mit einem zuvor in der Tabelle mit abgespeicherten Phasenwert vergleicht.

Ein Anwendungsbeispiel für die Spektrumsmodulation ist eine ISDN-Kanalvervielfachung auf einer Teilnehmeranschlußleitung in einem diensteintegrierenden digitalen Netz, dem sog. ISDN. Bei einer Basisanschlußkonfiguration werden jeder Endstelle 144 kbit/s zur Übertragung zugewiesen. Die 144 kbit/s teilen sich auf in zwei 64 kbit/s Kanäle zur Nutzinformationsübertragung, die sog. B-Kanäle und in einen Signalisierungskanal mit 16 kbit/s. Die 144 kbit/s reichen aus, um beispielsweise Fernsprechen, Telefaxen, etc. durchzuführen. Die 144 kbit/s reichen allerdings nicht mehr aus, will der Teilnehmer eine qualitativ hochwertige Bildverbindung aufbauen, z.B. eine Bildtelefonverbindung. Durch die Verwendung eines Modems, beinhaltend eine Modulationseinrichtung mit zugehöriger Demodulationseinrichtung, wie oben beschrieben, kann die Übertragungskapazität auf einem B-Kanal erhöht werden, so daß auch qualitativ hochwertige Bildübertragungen möglich sind. In jeder Endstelle werden die zu übertragenden Daten mittels der Spektrumsmodulation moduliert bevor sie übertragen werden. Somit können z.B. 10 Kanäle über die beiden B-Kanäle im Multiplexverfahren übertragen werden, wenn jeder Kanal für die gleichzeitige Übertragung von fünf Trägerfrequenzen ausgelegt wird.

Ein weiteres Anwendungsbeispiel für die Spektrumsmodulation ist der stationäre Schmalbandfunk. So kann die Spektrumsmodulation z.B. im Kurzwellenbereich, im Rundfunkbereich, in der Satellitentechnik oder für stationäre Funktelefonsysteme, z.B. dem sog. DECT, verwendet werden. In üblichen Sendeeinrichtungen werden die zu übertragenen Signale zusätzlich mittels einer oben beschriebenen Modulationseinrichtung mit der Spektrumsmodulation moduliert. In den Empfangseinrichtungen werden die empfangenen Signale vorab mit einer oben beschriebenen Demodulationseinrichtung demoduliert. Bestehende Funkkanäle können somit leistungssteigernd nachgerüstet werden.

Ein weiteres Anwendungsbeispiel für die Spektrumsmodulation ist der Schmalband-Mobilfunk. In einem Mobilfunknetz aus mehreren Zellen, befindet sich in jeder Zelle eine Basisstation. Jede Basisstation beinhaltet mehrere Modulations/Demodulationseinrichtungen wie oben beschrieben. Jeder Mobilfunkteilnehmer kann über eine Mobilstation bei der Basisstation, in deren Zelle er sich befindet wahlweise 4, 8, 16, 64 oder 144 kbit/s Übertragungskanäle zur Übertragung eigener Daten, Bilder, etc. anfordern. Verbindungen mit einer höheren Übertragungskapazität verursachen höheren Kosten für den Teilnehmer, ermöglichen ihm aber eine qualitativ höherwertige Verbindung und/oder eine schnellere Übertragung. Für die Modulation und Demodulation genügt es zu Beginn der Übertragung die Anzahl der möglichen Trägerfrequenzen und ggf. die Art der zusätzlichen Übertragung, z.B. mittels Amplitudenmodulation oder Winkelmodulation anzugeben. Es können somit Mobilstationen verkauft werden, in denen die Erzeugung von zwei, drei, vier, usw. Trägerfrequenzen möglich sind. Damit ist eine Staffelung im Preis für verschiedene Mobilstationen möglich. In den Basisstationen sind geeignete Modems enthalten, beinhaltend oben beschriebene Modulations- und Demodulationseinrichtungen, um die verschiedenen Übertragungskapazitäten anzubieten.

Ein weiteres Anwendungsbeispiel für die Spektrumsmodulation ist die kostengünstige Erhöhung der Übertragungskapazität bereits belegter Übertragungskanäle, die spektrale und/oder zeitliche Lücken aufweisen. Ein Übertragungsstrecke, leitungsgebunden oder Funkverbindung, wird beispielsweise durch einen bestehenden Dienst unzureichend genutzt. Durch die Verwendung eines Modems mit einer Modulations- und einer Demodulationseinrichtung, wie oben beschrieben, und eines Kopplers zum Einkoppeln der zusätzlichen Signale auf der Sendeseite und eines Modems und eines Kopplers zum Auskoppeln der zusätzlichen Signale auf der Empfangsseite kann die Übertragungskapazität des Übertragungskanals erhöht werden. Die Koppler sind beispielsweise Zeitmultiplex- und Zeitdemultiplexeinrichtungen oder Freqeunzweichen.

Ein weiteres Anwendungsbeispiel für die Spektrumsmodulation ist ein Punktzu-Mehrpunkt System, z.B. Breitband-Mobilfunk zwischen einer Funkfeststation und mehreren Basisstationen. Von der Funkfeststation aus werden mit einer der obigen Modulationseinrichtungen modulierte digitale Signale mit 1000 Trägerfrequenzen zu den Basisstationen übertragen. Jede Basisstation hat ein Frequenzfilter, z.B. ein Bandpaßfilter, das nur die für die spezielle Basisstation bestimmten Signale im zuvor definierten Frequenzbereich zu einer entsprechenden Demodulationseinrichtung weiterleitet und alle anderen Trägerferquenzen herausfiltert. Das Frequenzfilter einer Basisstation ist beispielsweise geeignet 50 Trägerfrequenzen weiterzuleiten. Genutzt werden von der Basisstation im Mittel 30 Trägerfrequenzen. Die Frequenzbereiche der Frequenzfilter einzelner Basisstationen überlagern sich, so daß bei Spitzen lasten einer Basisstation 50 Trägerfrequenzen zugeteilt werden können. Ein Zahlenbeispiel soll dies verdeutlichen :

Das Synchronisationssignal hat die Frequenz 2 GHz. Jede Basisstation hat ein separates Filter, um das Synchronisationssignal zu empfangen. Die erste Basisstation hat ein Frequenzfilter von 2 GHz bis 2,000050 GHz. Die Trägerfrequenzen sind in einem Abstand von 1 kHz angeordnet. Damit können von der ersten Basisstation 50 Trägerfrequenzen empfangen werden. Die zweite Basisstation hat ein Frequenzfilter von 2,000031 GHz bis 2,000080 GHz. Die Trägerfrequenzen sind in einem Abstand von 1 kHz angeordnet. Damit können von der zweiten Basisstation 50 Trägerfrequenzen empfangen werden. Von der ersten Basisstation werden in der Regel die 30 Trägerfrequenzen von 2,000001 GHz bis 2,000030 GHz genutzt; von der zweiten Basisstation die 30 Trägerfrequenzen von 2,000041 GHz bis 2,000070 GHz. Die 10 freien Trägerfrequenzen von 2,000031 GHz bis 2,000040 GHz können von der Funkfeststation bei Spitzenlast wahlweise der ersten oder der zweiten Basistation zur Verfügung gestellt werden. Benötigt die erste Basisstation mehr als 40 Trägerfrequenzen, so wird eine Umverteilung durchgeführt. Die erste Basisstation erhält dann die Trägerfrequenzen von 2,000001 GHz bis 2,000050 GHz, während die zweite Basisstation die 30 Trägerfrequenzen von 2,000051 GHz bis 2,000080 GHz erhält. Entsprechendes gilt für die weiteren Basisstationen. Der zu detektierende Frequenzabstand beträgt 500 Hz, was meßtechnisch auf einfache Art und Weise erfaßbar ist.

## Patentansprüche

1. Modulationseinrichtung (MOD) zur Modulation digitaler Signale, beinhaltend eine Steuereinheit ( CTRL ) , die geeignet ist, zu übertragende digitale Signale einer Trägerfrequenz (f1) in einem Übertragungskanal mit einer vorgegebenen Bandbreite zuzuordnen,
**dadurch gekennzeichnet,**
daß die Steuereinheit ( CTRL ) geeignet ist, die zu übertragenden Signale mindestens einer weiteren Trägerfrequenz ( f2, f3, f4, f5 ) im Übertragungskanal vorgegebener Bandbreite zuzuordnen.

2. Modulationeinrichtung ( MOD ) nach Anspruch 1, dadurch gekennzeichnet, daß mindestens zwei Frequenzgeneratoren zum Generieren der Trägerfrequenzen (f1, f2, f3, f4, f5) vogesehen sind, und daß der Frequenzabstand zweier Trägerfrequenzen mindestens um den Faktor 500 geringer ist als der Absolutwert einer Trägerfrequenz ( f1, f2, f3, f4, f5 ).

3. Modulationeinrichtung ( MOD ) nach Anspruch 1 oder 2, dadurch gekennzeichnet, daß die Steuereinheit ( CTRL ) mindestens zwei ansteuerbare Mittel (SS1, SS2, SS3, SS4, SS5) zur Aussendung von Trägerfrequenzen (f1, f2, f3, f4, f5 ), die untereinander einen phasengleichen Schwingungsbeginn aufweisen, beinhaltet, daß die digitalen Signale aus zeitlich parallel vorliegenden Bitströmen ( DATA1, DATA2, DATA3 ) bestehen, und daß die Mittel (SS1, SS2, SS3, SS4, SS5 ) in Abhängigkeit von den Bitströmen ( DATA1, DATA2, DATA3 ) angesteuert werden.

4. Modulationeinrichtung ( MOD ) nach Anspruch 3, dadurch gekennzeichnet, daß eine Addiereinheit ( ADD ) vorgesehen ist, um die von den Mitteln ( SS1, SS2, SS3, SS4, SS5 ) ausgesendeten Trägerfrequenzen ( f1, f2, f3, f4, f5 ) zu überlagern.

5. Modulationeinrichtung ( MOD ) nach Anspruch 4, dadurch gekennzeichnet, daß der Addiereinheit ( ADD ) ein Amplitudenbegrenzer ( AMP ) nachgeschaltet ist, um die Amplitude der überlagerten Trägerfrequenzen (f1, f2, f3, f4, f5 ) auf eine vorgegebene Amplitude zu begrenzen.

6. Modulationeinrichtung ( MOD ) nach Anspruch 3, dadurch gekennzeichnet, daß eine Detektionseinheit ( DET ) vorgesehen ist, um die Binärwerte der Bitströme ( DATA1, DATA2, DATA3 ) zu detektieren und zu Ansteuersignalen für die Mittel (SS1, SS2, SS3, SS4, SS5 ) zu kombinieren.

7. Modulationeinrichtung ( MOD ) nach Anspruch 3 oder 6, dadurch gekennzeichnet, daß eine Anpassungsschaltung ( INV, OR, AND ) vorgesehen ist, um die Ansteuerrung der Mittel (SS1, SS2, SS3, SS4, SS5 ) mit einem Taktsignal ( CLK ) zu kombinieren, um die Aussendung einer vorgegebenen Trägerfrequenz (f1) in Abhängigkeit des Taktsignals ( CLK ) zu erreichen.

8. Modulationeinrichtung ( MOD ) nach Anspruch 7, dadurch gekennzeichnet, daß die Detektionseinheit ( DET ) geeignet ist, aus den Binärwerte der Bitströme ( DATA1, DATA2, DATA3 ) ein zusätzliches Ansteuersignal für ein Mittel ( SS1 ) zu generieren, betreffend die Winkeleinstellung der auszusendenden Trägerfrequenz.

9. Modulationeinrichtung ( MOD ) nach Anspruch 6, dadurch gekennzeichnet, daß die Detektionseinheit ( DET ) geeignet ist, aus den Binärwerte der Bitströme ( DATA1, DATA2, DATA3 ) Ansteuersignale für eine Anzahl von Mitteln (SS1, SS2, SS3, SS4, SS5 ) zu generieren, die die Anzahl der Bitströme ( DATA1, DATA2, DATA3 ) übersteigt.

10. Demodulationseinrichtung ( DMOD ) zur Demodulation von digitalen Signalen, dadurch gekennzeichnet, daß mindestens ein Mittel ( M ) vorgesehen ist, das geeignet ist, in einem Übertragungskanal vorgegebener Bandbreite mindestens drei Trägerfrequenzen ( f1, f2, (f1 + f2)/2, f3, (f2 +f3)/2, f4, f5 ) zu detektieren, in Abhängigkeit vom detektierten Ergebnis und der Anzahl der möglichen Trägerfrequenzen eine Bitkombination zu erzeugen und mehrere zeitlich nacheinander erzeugte Bitkombinationen zu mindestens einen Bitstrom ( DATA1,DATA2, DATA3 ) zusammenzusetzen.

11. Demodulationseinrichtung ( DMOD ) nach Anspruch 10, dadurch gekennzeichnet, daß das Mittel ( M ) geeignet ist, Trägerfrequenzen (f1, f2, (f1 + f2)/2, f3, (f2 +f3)/2, f4, f5 ) zu detektieren, deren Frequenzabstand mindestens um den Faktor 500 geringer ist, als der Absolutwert einer Trägerfrequenz (f1, f2, (f1 + f2)/2, f3, (f2 +f3)/2, f4, f5 ).

12. Demodulationseinrichtung ( DMOD ) nach Anspruch 10, dadurch gekennzeichnet, daß ein Phasendetektor vorgesehen ist, um die Phasenlage einer Trägerfrequenz (f1) zu detektieren und den detektierten Wert dem Mittel ( M ) zuzuführen, und daß das Mittel ( M ) geeignet ist, eine Bitkombination auch in Abhängigkeit des detektierten Wertes zu erzeugen.

13. Demodulationseinrichtung ( DMOD ) nach Anspruch 10, dadurch gekennzeichnet, daß ein Amplitudendetektor ( ADET ) vorgesehen ist, um die Amplitude von empfangenen Trägerfrequenzen ( f1, f2, (f1 + f2)/2, f3, (f2 +f3)/2, f4, f5 ) zu detektieren und den detektierten Wert dem Mittel ( M ) zuzuführen, und daß das Mittel ( M ) geeignet ist, eine Bitkombination auch in Abhängigkeit des detektierten Wertes zu erzeugen.
